Europäisches Patentamt

European Patent Office

Office européen des brevets

(11) EP 0 694 857 A1

(19)

(12) **EUROPEAN PATENT APPLICATION**

(43) Date of publication:
31.01.1996 Bulletin 1996/05

(51) Int Cl.6: **G06F 17/30**

(21) Application number: 95305013.5

(22) Date of filing: 19.07.1995

(84) Designated Contracting States:
DE FR GB

(30) Priority: 28.07.1994 JP 176396/94

(71) Applicant: **International Business Machines
Corporation
Armonk, N.Y. 10504 (US)**

(72) Inventors:
• **Morohashi, Masayuki
Tokyo-to (JP)**
• **Maruyama, Hiroshi
Tokyo-to (JP)**
• **Tsutsumi, Taijiro
Machida-shi, Tokyo-to (JP)**
• **Negishi, Shiho
Machida-shi, Tokyo-to (JP)**

(74) Representative: **Davies, Simon Robert
Winchester, Hampshire SO21 2JN (GB)**

(54) **Information retrieval system and method**

(57)    A search system is provided for allowing positive feedback indicating what portions of accumulated information correspond to the condition specified by a searcher. A plurality of views are provided 1404 which classify accumulated information by separate, fixed aspects and each display the number of components for each aspect. These views are linked with each other to change dynamically in response to the count of search results and view selection by the user during a search process. Further, a set of information reduced by the searcher reflects the feedback of information retrieved by applying previous views. This helps the searcher to estimate the effect of new reducing conditions. This feedback also allows the searcher to find out the consequences of reducing conditions which have not been planned first. This is especially useful for the searcher who has not enough expert knowledge about the field concerned to find out a desired subject using a keyword given without due consideration.

FIG. 2

System configuration

EP 0 694 857 A1

## Description

The present invention relates to a method and system for retrieving information such as documents from a set of stored information.

Information retrieval systems are well known in the art which retrieve literature, patents, or the like information based on a keyword or thesaurus.

In particular, man-machine communication methods employed by information retrieval systems which require interaction with the user are generally either menu-driven, wherein the system takes the initiative on operations, or command-driven, wherein the user leads them.

A typical menu system for information retrieval relies on thesaurus-based retrieval which displays terms of the thesaurus and makes the user pick one of them, like picking a selection from a hierarchical menu. However, there are few methods for traversing the thesaurus on the screen, because of the limited terms (selections) which can be displayed at a time (this may be due to difficulties in designing a suitable graphical user interface (GUI)). As the number of selections to be displayed at one layer increases, they will not be included simultaneously within one screen. On the other hand, when they are decreased, layers will become too deep to reach a desired selection, with the user becoming lost. A common system for information retrieval expects the user to find out an appropriate term from the thesaurus published as a printed guide book. For a large information retrieval system, however, even a single guide book, titled "thesaurus", contains a great number of pages. It is labor intensive, even to a skilled user, to do searching based on such guide book. Further, this method is not effective for reaching desired information, if the menu structure provided by the system is contrary to the user's intuition.

In another menu-driven method, it is examined in advance to which term in a thesaurus each document belongs, and the item and the number of relevant documents are a displayed term in the menu. Since these numbers can not be updated in the course of a conditional search, how many documents belong to each term cannot be known by appropriately giving conditions, such as "documents published in the last three years" and "among documents published in a form of an electronic book."

On the other hand, the command-driven method (called the free keyword method for information retrieval) allows the user to obtain search results sequentially as the user inputs keywords. This method is thus useful when a skilled user prepares a number of search expressions and sequentially reduces items until a desired number of items are obtained. Such search expressions generally include logical operations (AND, OR, NOR, etc.) for multiple conditions. This conventional method, however, does not permit the prediction of which condition has what influence on results. In other words, to confirm that there has been no missing document not found, it is necessary, for every condition used in the retrieval, to verify the difference in results one after another between those including and those not including the conditions. As retrieval becomes complicated even for relatively simple searches, the number of combinations of logical expressions actually becomes very large. This virtually precludes the use of such method.

Many retrieval systems are designed with the assumption that the user is familiar with the information and the relevant field they are looking for, so there is no provision for reducing many retrieved documents into several appropriate ones in response to a request by an unskilled user who comes up with nothing but only one simple search word, like "I want to know about XX". Recently, there has been proposed a method for marking relevant documents with priorities. In this method, priorities are not specified by the type of searcher (professional or not) or request, but by the relevancy between the search word and the documents. Thus, it is likely that field-specific documents have a higher priority. This method is not useful in solving the problem considered herein.

Japanese patent publication 2-238567 discloses provision of a supplementary means for presenting classifications based on different aspects of the data to be retrieved. However, the classifications presented based on the different aspects are not flexible; it is not possible to choose a desired aspect and apply it dynamically or apply another aspect to the one being presented.

Japanese patent publication 6-68156 discloses a system which defines and controls database aspects. This system comprises means for navigation among panels arranged in a number of hierarchical layers, means for customizing the panels arranged in hierarchical layers for a certain environment, and means for storing customized panels so as to be available when information in a database is accessed and displayed. The information in the database is displayed using the panels arranged in hierarchical layers. This patent discloses navigation among the panels arranged in a hierarchical manner, however, only the panels (or views) within the layers given in advance are applicable to search results, and there is no provision for allowing any view to be applied dynamically.

Accordingly, the present invention provides a computer-based information retrieval method for retrieving stored information in response to interactive operations and displaying the retrieval result on a graphics screen, said method comprising the steps of:

preparing and storing a plurality of views through which to view the retrieval result from different aspects;

applying at least one of said views to said stored information;

displaying on said screen a visual representation of said applied view, said visual representation containing a plurality of classification elements each of which is visually associated with an indication of the respective number of information elements in said stored information;

allowing a user to select at least one classification element; and

in response to said select operation, retrieving said stored information using the at least one selected classification element as a keyword.

In a preferred embodiment, said information to be retrieved comprises a set of documents and said number of information elements is the number of documents related to said classification elements. Said classification elements are represented by icons and said indication of the number of information elements comprises a numeral displayed in association with a respective classification element.

The method may further include the steps of: inputting a keyword to be retrieved, prior to applying said view; retrieving stored information based upon the inputted keyword and temporarily storing the retrieval results, wherein the applied view is applied to said temporarily stored retrieval results, and in response to said select operation, said stored information is retrieved from said temporarily stored retrieval results. A synonym dictionary may be associated with different keywords, wherein said step of retrieving stored information based upon the inputted keyword includes the steps of accessing said synonym dictionary to locate synonyms of said keyword, and retrieving stored information based not only upon said inputted keyword, but also based upon the located synonyms thereof.

The retrieval results obtained in response to said select operation may themselves be temporarily stored. Subsequently therefore, the search can be further developed by selecting and applying at least one of said plurality of views to these temporarily stored retrieval results. Where retrieval results are temporarily stored, it is preferred to store them as a log which is separately accessible. Thus retrieval results may be sequentially recorded as a log, allowing previous retrieval results to be called.

In a preferred embodiment, said graphics screen provides multiple display windows, and each visual representation of any applied view is displayed in a single separate window. A first view may then be associated with a second, different, view and in response to the selection and display of said first view, a visual representation of said associated second view may be displayed in a different window from the window in which said first view is displayed. Also, a window may be generated and assigned to a prepared view, thereby making said view active, and in response to the retrieval of stored information based on a keyword, a determination may be made as to whether there is an active view, and if so, a visual representation of said view may be displayed in the window assigned to said active view. Additionally, a condition may be specified for automatically opening at least one of said plurality of views upon receiving retrieval results, and in response to the retrieval of stored information based on a keyword, it may be determined if said retrieval results meet the condition for automatically opening a view, and if so, a new window may be opened and a visual representation of the view to be automatically opened may be displayed therein.

In a preferred embodiment, the method further comprises the steps of building a two-dimensional table for storing in a tabular form the number of information elements including said classification elements and the number of said information elements including at the same time all of said classification elements, other classification elements of the current view, and classification elements of other views, for respective classification elements of said plurality of views; and for retrieved information elements estimating from the value of the count stored in said two-dimensional table the number of retrieved information elements for each classification element of the currently opened view.

The invention further provides a computer-based information retrieval system for retrieving stored information in response to interactive operations and displaying the retrieval result on a graphics screen, said system comprising:

means for preparing and storing a plurality of views through which to view the retrieval result from different aspects;

means for applying at least one of said views to said stored information;

means for displaying on said screen a visual representation of said applied view, said visual representation containing a plurality of classification elements each of which is visually associated with an indication of the respective number of information elements in said stored information;

means for allowing a user to select at least one classification element; and

means, responsive to said select operation, for retrieving said stored information using the at least one selected classification element as a search criterion.

Viewed from another aspect, the invention provides a computer-based information retrieval system for retrieving text information in response to interactive operations and displaying the retrieval result on a graphic screen, the system comprising:

(a) data storage means for storing data to be retrieved in a computer accessible manner;

(b) view storage means for storing a plurality of views through which to view the retrieval result from different aspects in a computer accessible manner;

(c) input means for inputting a keyword to be retrieved;

(d) retrieval means for retrieving the data stored in said data storage means based upon the keyword being input by said input means;

(e) storage means for temporarily storing results being retrieved by said retrieval means;

(f) view application means for applying at least one of a plurality of views stored in said view storage means to the retrieval results stored in said temporary storage means;

(g) display means responsive to the application of said view for displaying a visual representation classified by the aspect of said applied view, said visual representation containing separate classification elements each of which is visually associated with the number of said classification elements relative to said data in said temporary storage means;

(h) view element selection means for allowing a user to select at least one classification element in said view; and
(i) means responsive to select operation of said view element selection means for using a selected element as a key to further retrieve the search results stored in said temporary storage means and storing new results as a temporary search result.

Viewed from yet another aspect, the invention further provides a computer-based information retrieval method for retrieving text information in response to interactive operations and displaying the retrieval result on a multi-window graphic screen, the method comprising the steps of:

(a) preparing a plurality of views through which to view the retrieval result from different aspects and storing said views in a computer accessible manner;

(b) generating a separate window and assigning said window to at least one of said plurality of prepared views for making said separate view active;

(c) storing information to be retrieved in a computer accessible manner;

(d) prompting a user to input a keyword to be retrieved on said screen;

(e) retrieving said stored data based upon the keyword being input at said step (d);

(f) in response to the completion of said retrieval determining if there is an active view; and

(g) in response to the determination that there is an active view displaying in respective windows of said active view a visual representation classified by the aspect of said view, said visual representation containing separate classification elements associated with the number of said classification elements relative to said data being stored in an accessible manner.

Viewed from yet another aspect, the invention provides a computer-based information retrieval method for retrieving text information in response to interactive operations and displaying the retrieval result on a multi-window graphic screen, the method comprising the steps of:

(a) preparing a plurality of views through which to view the retrieval result from different aspects and storing said views in a computer accessible manner;

(b) specifying a condition for automatically opening at least one of said plurality of views upon receiving retrieval results;

(c) storing information to be retrieved in a computer accessible manner;

(d) prompting a user to input a keyword to be retrieved on said screen;

(e) retrieving said stored data based upon the keyword being input at said step (d);

(f) in response to the completion of said retrieval determining if said retrieval results meet the condition for automatically opening the view; and

(g) in response to the determination that the condition for automatically opening the view has been met at said step (f) opening a new window and displaying in said window a visual representation classified by the aspect of said view for which the condition for automatically opening the window is specified, said visual representation containing separate classification elements associated with the number of classification elements.

Viewed from yet another aspect, the invention provides a computer-based information retrieval method for retrieving text information in response to interactive operations and displaying the retrieval result on a multi-window graphic screen, the method comprising the steps of:

(a) storing a file to be retrieved which consists of a plurality of separate data elements in a computer accessible manner;

(b) preparing a plurality of views through which to view retrieval results from different aspects and each of which has a plurality of classification elements and storing said views in a computer accessible manner;

(c) building a two-dimensional table for storing in a tabular form the number of said data elements including said classification elements themselves and the number of said data elements including at the same time all of said classification elements, other classification elements of the current view, and classification elements of other views, for respective classification elements of said plurality of views;

(d) opening at least one of said plurality of views;

(e) retrieving said file to be retrieved under certain conditions; and

(f) for said data elements being retrieved at said step (e) estimating from the value of the count stored in said two-dimensional table the number of said retrieved data elements for each classification element of the currently opened view.

The invention further provides systems for implementing the above methods.

Thus a technique is provided for presenting to a searcher a great variety and huge amount of accumulated stored information. The retrieval navigation technique provides appropriate feedback of the correspondence of the condition given to the system by the searcher with a portion of accumulated information. Thus accumulated information may be classified by individual fixed aspects and a plurality of views prepared for each aspect. Each of the views displays the number of components of each aspect. These views are interlocked to change dynamically in the process of retrieval in response to the number of relevant results and view select operations by the user (searcher).

Furthermore, for a set of information narrowed down by the searcher, the information retrieved by applying a previous view may be presented as feedback to help the searcher to estimate the effect of the application of new conditions. This feedback can also be an aid to find a condition for narrowing down results which has not been planned first. This in turn will help the user, especially the searcher who has only limited knowledge in the field, to find a desired theme using a keyword the user has provided without due consideration. Another aspect is that when a new aspect is needed for the nature of information which should be accumulated, an authoring tool is provided to support designing of views corresponding to the new aspect.

An embodiment of the invention will now be described in detail by way of example only with reference to the following drawings:

Fig. 1 is a block diagram illustrating a hardware environment suitable for providing an information retrieval system in accordance with the present invention;

Fig. 2 is a block diagram illustrating the software components of an information retrieval system;

Fig. 3 shows a menu item versus document count matrix;

Fig. 4 illustrates the format of hierarchical menu items input to a view authoring support mechanism;

Fig. 5 illustrates a view of a single layer display technique;

Fig. 6 illustrates a view of a map display technique;

Fig. 7 illustrates a view of an upper and lower layer display technique;

Fig. 8 illustrates a view of a network display technique;

Fig. 9 illustrates a time series view with a line graph;

Fig. 10 shows an example of a keyword search screen;

Fig. 11 is a flowchart of a view open processing;

Fig. 12 is a flowchart for reflecting reduceing results after the addition of search condition;

Fig. 13 is a flowchart for opening a title display window; and

Figs. 14-18 are screens illustrating examples of retrieving newspaper articles.

A. Hardware organization

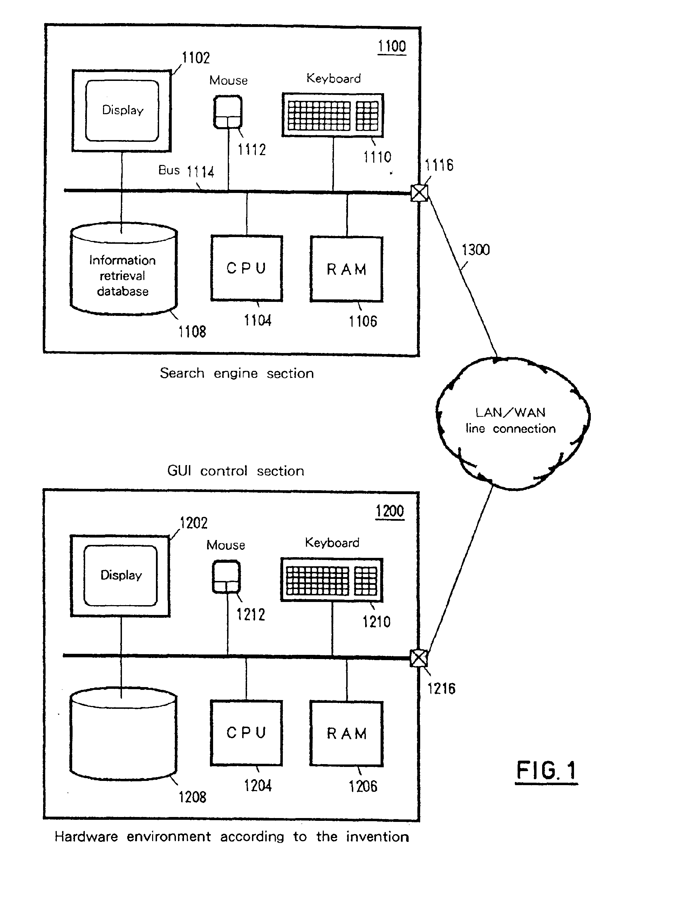

Referring to Fig. 1, there is shown a hardware organization which can be divided into a first workstation (server) 1100 having a search engine section, second workstation (client) 1200, and LAN or WAN line 1300 for connecting them using a protocol such as TCP/IP.

First workstation 1100 includes display device 1102 having bitmap display functions, CPU 1104 having arithmetic and I/O control functions, RAM 1106 for loading data and programs, disk storage 1108 which stores an operating system, information retrieval database, and search engine program, keyboard 1110 for inputting characters, mouse 1112, bus 1114 for interconnecting these components, and connection means 1116 for connecting first workstation 1100 to line 1300.

Second workstation 1200 includes display device 1202 having bitmap display functions, CPU 1204 having arithmetic and I/O control functions, RAM 1206 for loading data and programs, disk storage 1208 which stores an operating system and GUI control programs for displaying a plurality of views and search results (described below) in multiple windows on the screen of display device 1202, keyboard 1210 for inputting characters, mouse 1212, bus 1214 for interconnecting these components, and connection means 1216 for connecting second workstation 1200 to line 1300.

Although this embodiment assumes for illustrative purposes a distributed environment where search engine and GUI control sections are implemented in separate system devices, the operation of this invention can also be accomplished in a standalone environment where both search engine and GUI control sections are implemented on a single workstation.

The optimum operating system is a multitask operating system which is preemptive and allows for interprocess communication, such as AIX and OS/2, trademarks of IBM. However, it is also possible to implement the invention on any operating system having multitask functions and providing a GUI environment, such as Windows, a trademark of Microsoft.

In addition, the operating system which runs first workstation 1100 as a search engine section and the operating system which runs second workstation 1200 as a GUI control section may not be the same if they can be interconnected through a common protocol such as TCP/IP. For example, the search engine section may be based on AIX, and GUI control section on OS/2 or Windows.

B. Logical organization of the system

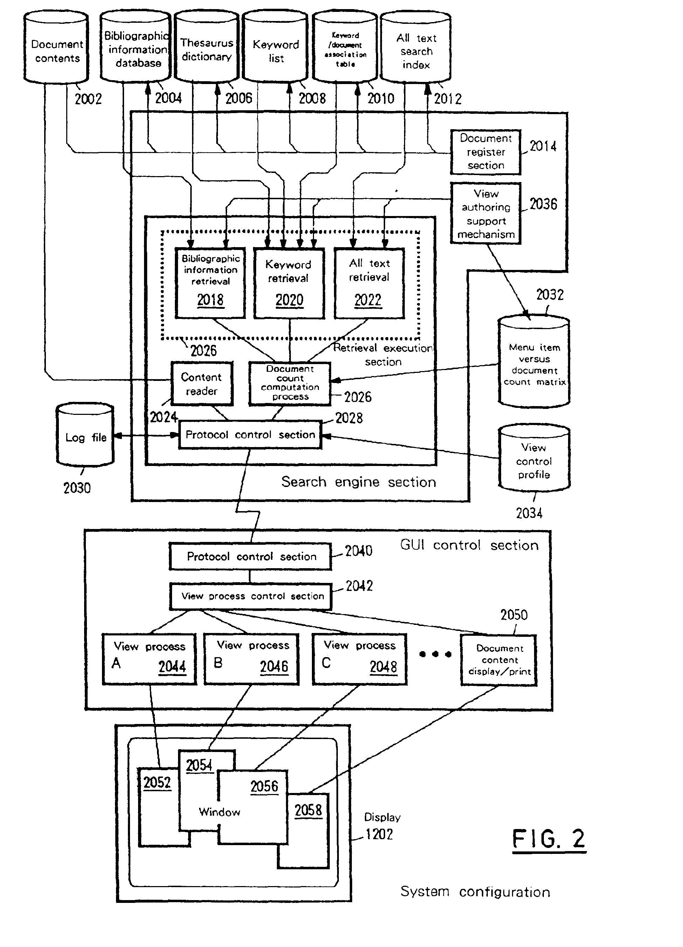

Referring to Fig. 2, there is shown a block diagram illustrating a logical configuration of the search engine section on first workstation 1100 and GUI control section on second workstation 1200.

First, as a component of the search engine section there is document contents 2002 which contains all texts of the document to be retrieved. In conjunction with the document contents 2002, there is generated bibliographic item database 2004, thesaurus dictionary 2006, keyword list 2008, keyword/document association table 2010, and all text search index 2012. All of document contents 2002 and these components are preferably stored in disk storage 1108.

Document register section 2014 has the capability to receive documents in an electronic form from outside and to include them in document contents 2002, and update bibliographic item database 2004, thesaurus dictionary 2006, keyword list 2008, keyword/document association table 2010, and all text search index 2012 in order to reflect the included contents.

Methods for providing electronic files to document register section 2014 include downloading from a communication line via an external database, conversion of printed documents into text files by using an OCR device, and capturing of documents from commercially available CD-ROM patent publications. Or, documents may be input from the keyboard using a text editor or wordprocessor.

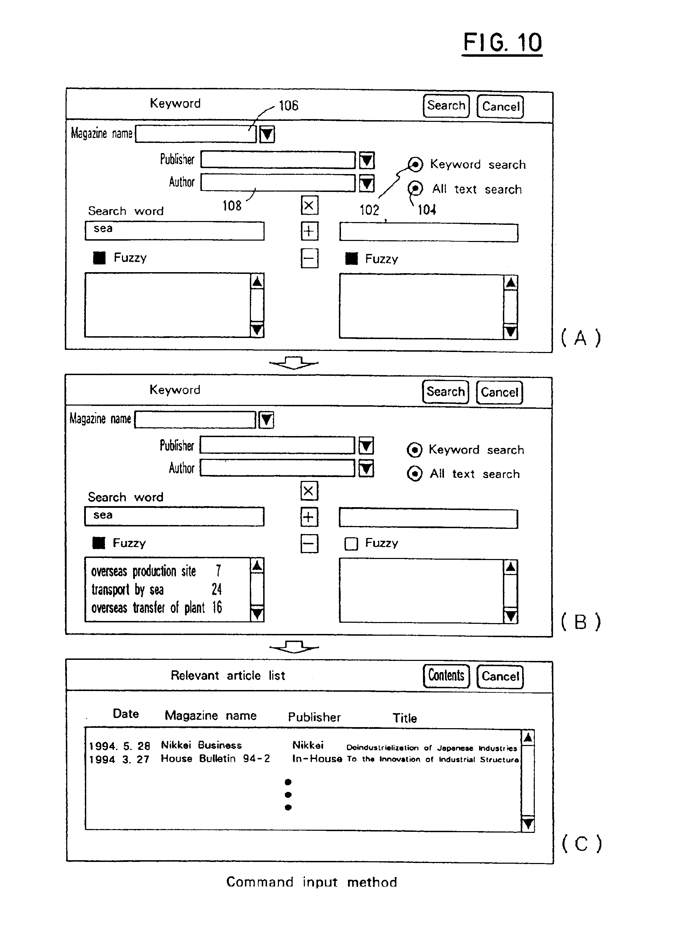

The retrieval execution section, a major portion of the search engine, consists of bibliographic information retrieval mechanism 2018 for retrieving bibliographic information from bibliographic information database 2004 upon request, keyword retrieval mechanism 2020 for retrieving a keyword upon request from keyword list 2008, as well as from thesaurus dictionary 2006 and keyword/document association table 2010, and all text retrieval mechanism 2022 for retrieving all texts upon request from all text search index 2012. The screen for specifying bibliographic information, keyword, or all texts to be retrieved will later be described with reference to Fig. 10.

More specifically, the retrieval execution section includes bibliographic information retrieval mechanism 2018 which retrieves titles, authors, years of publication, book sizes, and other information stored in a form of a relational database (RDB). Preferably, the number of references made is also accumulated as part of the retrieval data, as described below.

Keyword retrieval mechanism 2020 is provided to perform retrieval using a keyword which has been assigned to each document (by a specialist indexer or automatically by a computer). Retrieval is made in two steps. First, there is returned the word that the user has input, its synonym, and combined keywords including them (e.g., if a word "logic" is input, its combined keyword includes "symbolic logic", "logical operation", "logical sum", and "predicate logic"). In the second step of retrieval, the combined keyword is passed and the ID of related documents or the number of documents is returned.

All text retrieval mechanism 2022 essentially performs scanning throughout document contents 2002 and returns documents which contain the same character string as the input keyword. Actually, all text search index 2012 has been provided which is associated with the positions of occurrence of characters to return the answer in real time for a great amount of information.

Search results given through bibliographic information retrieval mechanism 2018, keyword retrieval mechanism 2020, and all text retrieval mechanism 2022 are passed to document count computation process 2026. Document count computation process 2026 references menu item versus document count matrix 2032 stored in disk storage 1108 and calculates the number of documents by each menu item. This processing by document count computation process 2026 will be later described in detail.

Content read process 2024, upon receiving a request from document contents display/print view 2050, reads from document contents 2002 corresponding document contents found through an all text search index and passes them to protocol control section 2028. Protocol control section 2028 is essentially responsible for passing the number of documents per item, document ID or title, or document contents data to another protocol control section 2040 in the GUI control section, and is connected with log file 2030 for sequentially storing search results in disk storage 1108 as a history and view control profile 2034 including files for specifying automatic activation of certain views. Search results arriving at protocol control section 2028 are sequentially stored in log file 2030. Log file 2030 stores the history of search results, i.e., the search word which has come up with the results, and the number of documents. Log file 2030 preferably contains the IDs of the documents obtained by retrieval, if the number of search results is small. Protocol control section 2028 sends currently active views, i.e., the views to which windows have been assigned at the GUI control section and which are being displayed, and the number of documents whose contents have been calculated for each item being specified in the views, to protocol control section 2040 via a LAN or WAN line. At this time, note that when a number of views are active at a single GUI control section (client workstation) or when a number of client workstations log in simultaneously and each of them opens at least one view, content calculations are made in parallel for individual views.

In the GUI control section, protocol control section 2040 is connected with view process control section so that, when search results arrive at protocol control section 2040, specified view processes 2044, 2046, 2048, ..., 2050, etc. are initiated and windows corresponding to individual views are opened on display device 1202 of second workstation 1200 on the side of GUI control section. For example, view process (A) 2044 is associated with window 2052 and view process (B) 2046 with window 2054. All graphical resources used for views, such as icons, bitmap graphic files, and title bars, are preferably provided at the GUI control section, i.e., at the client workstation. From the search engine, i.e., the server workstation, only the number of search results and the number of classifications corresponding to view items are sent to view process control section 2042 through protocol control sections 2028 and 2040. In this regard, note that if the search engine section is also responsible for GUI control and sends GUI data to the client machine, the data traffic would become large and processing speeds would be affected.

In particular, process 2050 is provided for displaying or printing document contents and associated with window 2058. Displayed in window 2058 are the data of document contents themselves being sent from content read section 2024 via protocol control sections 2028 and 2040. Using mouse 1212 (Fig. 1) to click on a desired menu in the menu bar (not shown) provided in window 2058, the entire document being displayed or a desired page can be printed.

View authoring support mechanism 2036 is a batch processing program which makes use of the retrieval execution section to add items to menu item versus document count matrix 2032. View authoring support mechanism 2036 and menu item versus document count matrix 2032 will be later described in detail.

In Fig. 2, document register section 2014 and view authoring support mechanism 2036 are not directly involved in interactive search processing with the user, and are preferably programs stored in disk storage 1108 and activated only by a document database administrator.

Bibliographic information retrieval mechanism 2018, keyword retrieval mechanism 2020, all text retrieval mechanism 2022, content read mechanism 2024, document count computation process 2026, and protocol control section 2026 are similar to document register section 2014 and view authoring support mechanism 2036 in that their programs are stored in disk storage 1108, but are preferably configured to start processing automatically during activation of first workstation 1100 and are run as a demon or background process. Therefore, shared memory, pipe, signal, semaphore, and/or other well known techniques for interprocess communication are preferably used to exercise control over or between bibliographic information retrieval mechanism 2018, keyword retrieval mechanism 2020, all text retrieval mechanism 2022, content read mechanism 2024, and document count computation process 2026.

C. Document count computation process

Document count computation process 2026 (Fig. 2) is a process to perform retrieval based on conditions for reducing the number of documents which have been input through the viewing process, taking the intersection of a set of the results of retrieval and the document set obtained from preceding retrievals (to reduce search results), and calculating classifications in all active views for feedback to the GUI control section. (More precisely, it calculates only the classifications of selections currently displayed in active views.) For this, document count computation process 2026 must know the items in all views currently active on all client workstations.

Two calculation methods are provided, depending on the size of document set to be calculated:

Case 1: If an immediately preceding retrieval has found the number of relevant documents to be smaller than a certain threshold (e.g. of the order of 100, which can be specified), or the immediately preceding retrieval has already been examined with this method, or a command-driven view has given conditions, then:
First, to determine the total number of documents, the process obtains the document set which matches the individual conditions being given by the user (from the retrieval execution section: which retrieval mechanism to use to obtain the information depends on the views, for instance, since the date of publication is recorded as bibliographic information, the bibliographic information retrieval mechanism is used), and executes set operations (if retrievals up to the immediately preceding one have been made with this method, only simple addition of the current conditions is needed for reduction). The number of document of this set will be the number of relevant documents after reduction. Afterwards, the classifications of this document set is examined to determine the number of documents corresponding to respective selections.

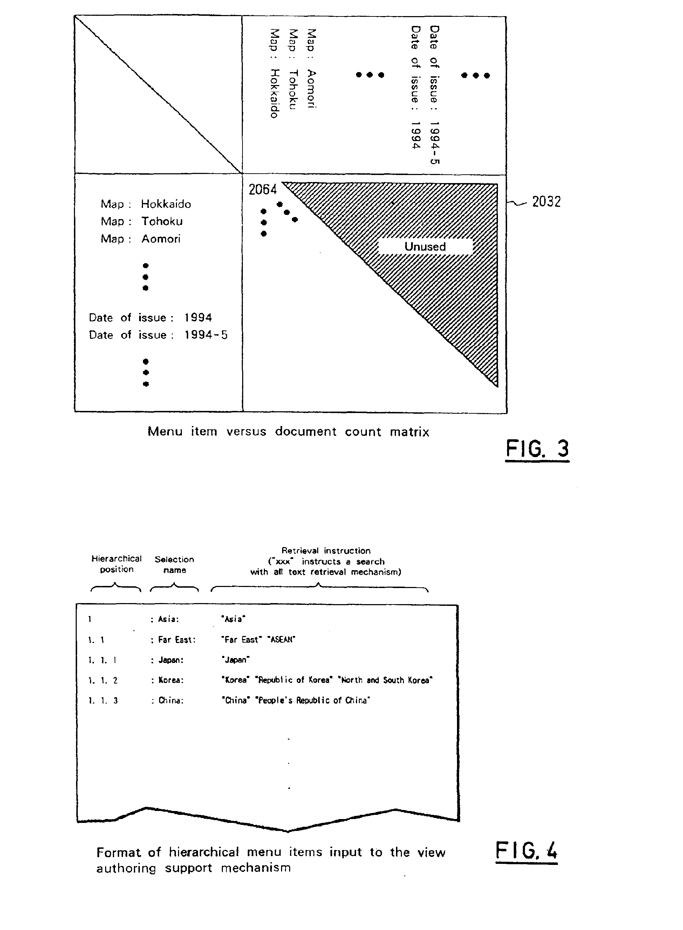

Case 2: If the number of relevant documents is larger than the threshold and no condition has been given from the command-driven view, then:
The number of documents is estimated. For this estimation, the process uses menu item versus document count matrix 2032 which has been calculated with the view authoring function, i.e., a table with the number of documents calculated when an arbitrary pair has been used to reduce all selections appearing in all views. Forming of this table will later be described with reference to Fig. 3.

If no more than two conditions are used for reduction, this matrix provides the accurate number of documents. For three conditions, the following expression is used for estimation:

[Expression 1]
$$f(xyz)=M(f(xz)f(yz)/f(z),f(xy)f(yz)/f(y),f(xy)f(xz)/f(x))$$

where $f(xy)$ is the number of documents associated with both selections x and y and M is an "averaging function" such as an arithmetic and geometric mean.

$$f(xyz) <= min(f(xz), f(yz), f(xy))$$
$$\text{If } f(xy) = f(y), \text{ then } f(xyz) = f(yz).$$

The estimation with three conditions allows for the one with n conditions.

OR'ing of x and y, $f(x+y)$, should be the sum of $f(x)$ and $f(y)$ (which must also be an estimate).

The system then applies all the search conditions specified so far to the above expression to determine the total number of documents $f(abcde...)$. (Actually the number for conditions other than the last has already been calculated, so this computation can be made incrementally.)

Classifications calculation is accomplished by an expression $f(abcde...x)$ with added item x for the corresponding selection. In general, an estimate of the count for the AND operation of $x_1$, $x_2$, $x_3$, ..., $x_m$ can be calculated from $f(x_i x_j)$ in the following expression:

[Expression 2]

$$f(x_1 x_2 \ldots x_m) = \frac{1}{m} \sum_{i=1}^{m} \sum_{j=1, j \neq i}^{m} \sum_{k=1, i \neq k, j \neq k}^{m} \frac{f(x_i x_j)}{f(x_k)}$$

D. View authoring support function

In this embodiment, view authoring support mechanism 2036 (Fig. 2) is responsible for adding items to menu item versus document count matrix 2032. Menu item versus document count matrix 2032 has a form as shown in Fig. 3. That is, search items are arranged in the ordinate and abscissa, whose crossing positions contain the number of documents retrieved by the AND operation of corresponding two items. Each item is necessarily related with a certain view. In Fig. 3, "Map: Hokkaido" indicates that a view named "map" is used to retrieve a word "Hokkaido". Since the table is constructed so that the ith item in the ordinate and the ith item in the abscissa (i = 1...n) are identical, the items on the diagonal of the table contain the number of documents obtained by a retrieval operation with only ith items. In addition, since the element in the ith row, jth column and the element in the jth row, ith column are identical, the table does not require elements for i>j. Each element in this table corresponds to the value f(xy) used in the aforementioned document count computation process. That is, by calculating in advance the number of documents relative to the AND operation of any of two items x and y using the retrieval execution section to create a table, the number of documents relative to the AND operation of any number of items can be deduced using the table elements with a relatively small amount of computation.

The contents of menu item versus documents count matrix 2032 are not fixed, and the items of menu item versus documents count matrix 2032 must be updated so that items to be contained in a new view created by any user (client) are additionally represented. Empty elements occasioned by the addition of items can be populated with the number of documents using the following four methods:

1. If a document whose bibliographic information has a field containing a particular value (or values) is the target document at the time of selection of the item, the input of the field and its value allows view authoring support mechanism 2036 to check the number of documents for the case of a single item and for the case of item ANDed with another item and complete the modified matrix. (The number of documents by itself will be examined from bibliographic information retrieval mechanism 2018.)

2. If a document including a particular keyword is the target document at the time of selection of the item, the input of the keyword allows the support mechanism to complete the modified matrix. (The number of documents by itself will be examined from keyword retrieval mechanism 2020.)

3. If a document including a particular character string (or strings, but not keyword) is the target document at the time of selection of the item, the input of the character string allows the support mechanism to complete the modified matrix. (The number of documents by itself will be examined from all text retrieval mechanism 2022.)

4. With a hierarchical menu, when items are input in the form of Fig. 4, the matrix will be completed using the following method:

The number written in the first field of each row is used to find leaf nodes, for which the number of documents are examined using either one of the methods 1 to 3 described above. The method to be taken will be known from the syntax of retrieval instructions.

After the number of documents has been determined for all leaf nodes, the search is started for the number of documents for the parent node in a bottom-up manner. This is determined by a union set operation for the document set at the child nodes.

Thus, the document set at each non-end node is determined with the following expression:

[Expression 3]

Document set = direct document set at own node U ( $\bigcup_{k=1}^{m}$ document set at child node), where m=Number of children.

Since the more members the sum of sets (unionb) contains, the more computation time is required, addition of the number of members may be used instead of union (for estimation of the number of documents), provided that the result does not exceed the total number of document sets, if at least one set exists which exceeds a certain amount (e.g. a threshold of the order of 1000).

E. View

A view management process is used to provide a GUI to allow an instant recognition of an aspect and perform processing including receiving user inputs and displaying the number of documents obtained from the search engine section. A plurality of views are prepared, and for each view, detailed classifications specific to individual views (e.g., the prefecture for the name of place; dominical year for date; mammalian, reptilian, birds, batrachian, etc. for animal; Christian, Buddhist, Hindu, Islamic, etc. for religion; and mystery, science fiction, historical, pure, imaginative, biography, etc. for fiction) and the corresponding behaviour of the GUI display are defined (e.g., for a prefectural view in the place name, the display of a map divided by prefecture; and the mammalian animals displayed by an icon of human being and the reptilian, birds, and batrachian animals displayed by icons of a snake, swallow, and frog, respectively). Note that detailed classifications specific to individual views are subsets of the search item group contained as an ordinate (or abscissa) in menu item versus document count matrix 2032, and the number of documents for each of classifications specific to individual views can therefore be predicted and presented in values in a relatively simple manner using the algorithm described above in connection with the document count computation process by referencing menu item versus document count matrix 2032.

Further, the views are characterized in that they provide a quantitative representation of the number of documents for each detailed classification. A typical example of quantitative representation is a numeric display such as "1247". Other examples of quantitative representation include bar graph and line graph. When requirements for presentation are not the absolute value of the number of documents for detailed classifications, but the percentage of the number of documents, circular graphs and pie charts may be used. Additionally, by specifying in advance the correspondence between colors and ranges of count, an approximate number of documents may be displayed by color.

Effective GUIs in allowing instant recognition of an aspect will be as follows:

- All selections in a single layer are displayed in an identical window as icons and the number of documents which belong to the current category is displayed near the icons. Whenever the user goes down through one layer, the window is again displayed or a new child window is opened in the lower layer.

- The number of documents for each selection included in a single layer is arranged in a map (or chart).

- The upper and lower layers of the layer being focused are displayed. Or, the currently focused layer and its lower two layers are displayed. Shifting the focus upward or downward changes the range of display.

- If a thesaurus is identified by a distance between concepts, such as in a semantic network (if a network structure is used instead of a hierarchical structure), a semantic network itself is displayed in a window.

Referring now to the drawings, examples of the view display method will be described.

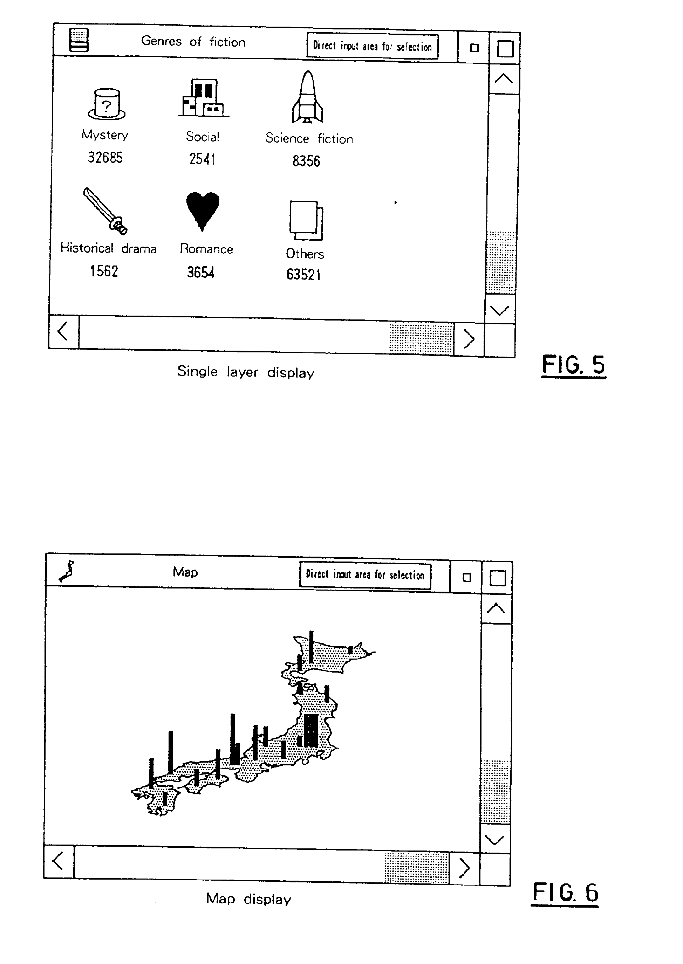

Fig. 5 shows an example of one layer of display. This example is a view for genres of fiction. Individual genres including mystery, social, science fiction, historical drama are indicated by different icons (having appropriate figures for symbolizing respective contents), with the number of documents indicated by numerals beneath the icons. For example, quite a few people would cite the mystery, science fiction, or the like, when asked what genres fiction has. It seems however that few people comprehend all the genres of fiction. However, in accordance with the present invention, merely by opening the view for the genres of fiction, the classifications of the number of documents per genre are presented, giving the user a new aspect which could lead to his or her discovery of new genres, and also it is possible for the user to increase his or her knowledge by applying a different view to such unexpected genres.

Referring now to Fig. 6, there is shown a map display view. This example is a view of the Japanese Islands with bars extending upward from respective prefectures indicating the number of documents for each prefecture. This view is applied as follows: a map view is applied to, for instance, the mystery in the genres of fiction described above. The document counts are divided by prefecture based on the place name appearing in novels, and a bar chart is displayed, as shown in Fig. 6. Looking at this chart, the user would see that the Fukuoka prefecture has an unexpectedly high figure, and pay attention to the existence of mystery novels with their stage set at the Fukuoka prefecture. If such view is not used and the document count per prefecture is checked in a command-driven manner, there must be the assumption that the user has considerable technical knowledge. This is because the user must estimate the prefecture having a large number of documents and input appropriate commands with search words such as Tokyo, Kanagawa, and Fukuoka.

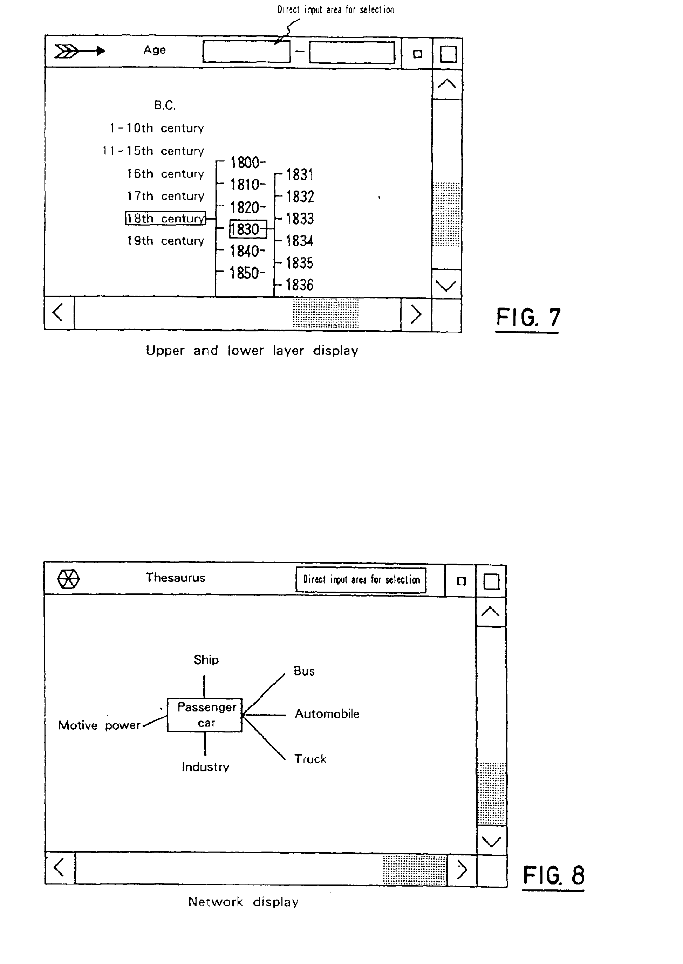

Referring now to Fig. 7, there is shown a method for displaying upper and lower layers. In this example, historical age is divided in sequence. Since the age can be an extended period, a scroll bar is preferably provided at the top and bottom of the window, and by clicking the mouse, layers of age can be traversed. Although not specifically shown in Fig. 7, the number of documents are quantitatively presented by associating numerals, as in Fig. 5, with elements such as "B.C.", "1-10th century", and "1810" for display in Fig. 4, (e.g. in a size smaller than the age itself to avoid confusion), or colored, for instance, where the colors which are closer to red might for example denote a higher number and colors closer to blue denote a lower number.

Fig. 8 shows a view of network display method. In this example a view of a thesaurus (synonym) is shown. With this method, in response to a keyword of "automobile", for example, a synonym dictionary is searched automatically and not only "bus", "passenger car", and "truck" which belong to a lower category of "automobile" but also the words of "motive power", "ship", and "industry" which are similar in concept from a different aspect are linked for display. Although not specifically shown in Fig. 8, the number of documents is again quantitatively presented by associating numerals, as in Fig. 5, with elements such as "automobile", "ship", and "industry" for display, or coloring. According to such quantitative presentation, the user would be interested in further applying the thesaurus to a word which involves a relatively larger number of documents to know its classification (e.g. applying the thesaurus to "industry" could link to words such as "mechanical industry", "space industry", and "electronic industry" which would then be displayed), or find that the number of documents which include the word bus are unexpectedly small.

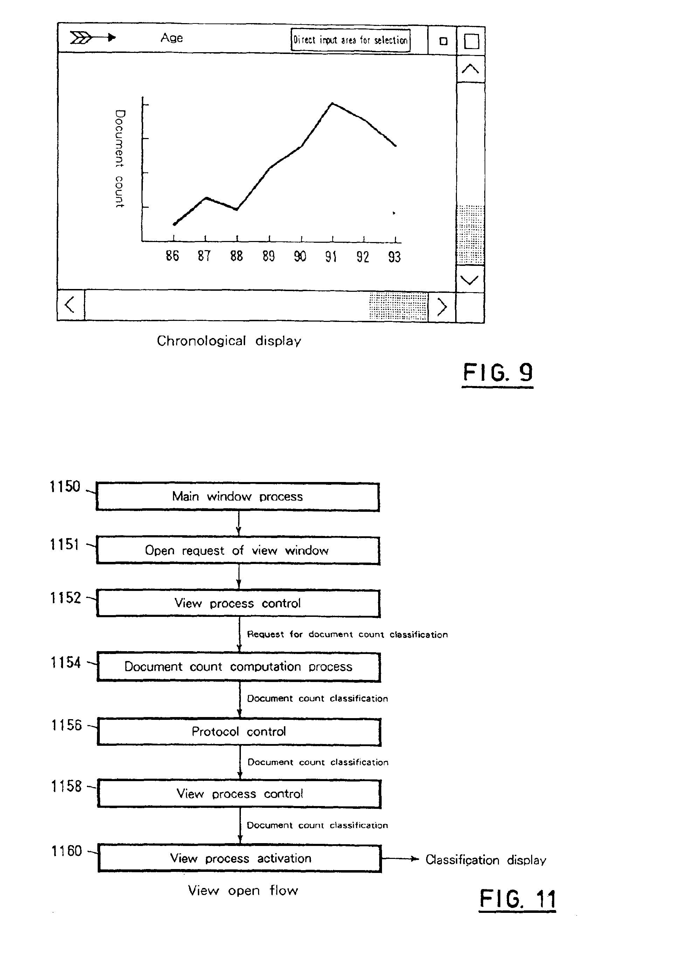

Fig. 9 shows a chronological view (also called business chart). In this example, the number of documents is indicated as a line graph. Again, by providing a scroll bar at the bottom of the window, the periods of age can be followed and the transition in count be checked.

It should be understood that the views shown in Figs. 5 to 9 are used only for illustrative purposes without limitation to these particular views. For example, there may be provided a view for the names of corporations, persons, etc. To provide a corporate name view, a database of corporate names should be prepared, because when any proper noun is encountered in a text, it cannot be identified as a corporate name, place name, or person name without such database. In this case, by associating parent corporations, subsidiaries, allied and competitive corporations in the corporate name database using a thesaurus, a corporate name view can be constructed, just like the view shown in Fig. 8.

In any view shown in Figs. 5 to 9, individual classified elements, such as the icon indicating a genre of mystery as shown in Fig. 5, the region of Kanagawa prefecture on the map shown in Fig. 6, the indication of "18th century" in Fig. 7, the indication of "ship" in Fig. 8, and the indication of year "88" in Fig. 9, should be selectable by clicking the mouse. To indicate the selection, a rectangular frame enclosing the classified element may be displayed or the element may be highlighted.

In this embodiment, a single view permits a plurality of classified elements to be selected. In this manner, as a search operation is directed after selection of one or more classified elements, search results are so narrowed down as to limit them to the selected classified elements. In particular, when a number of classified elements are selected to direct a search operation, search results will be narrowed down as in a search by OR operation. In the view shown in Fig. 5, for example, clicking the icon of mystery to highlight and then clicking the icon of historical drama to highlight before directing a search operation, causes the range of search to be limited to those novels which correspond either to the mystery or historical drama, and another view may be applied to the reduced results.

The "direct input area for selection" shown in Figs. 5 to 9 is provided to enable a selection which cannot be directly pointed by the mouse (including those selections which have accidentally become invisible on the current window screen) to be input directly with the keyboard rather than to be moved to a visible position by clicking on the scroll bar. In Fig. 7, for example, clicking the "direct input area for selection" to input "1946-1955" results in the same effect as clicking 10 years worth of selections in the 1940-50s which are not displayed on the screen.

For the command-driven view, processing is such that, as shown in Fig. 10, a keyword being input by the user and an associated keyword (inferred through, for instance, a synonym dictionary) are displayed as feedback information and finally the number of target documents is displayed by using these keywords. As user options, several user-specifiable search methods are provided, such as fuzzy search and all text search. In Fig. 10, for example, clicking check button 102 with the mouse will specify keyword search, clicking check button 104 with the mouse will specify all text search, and typing a specific word in a column, such as "magazine name" and "author" will specify searching of bibliographic items.

While the magazine name, author, and other objects are accompanied by their own views, these objects may be retrieved also in the view shown in Fig. 10. However, this view allows the use of a synonym dictionary, so that inputs can be made in a form of common name or abbreviation.

In Fig. 10(A), for example, when the user types "sea" as a search word, clicks "search" in the title bar for keyword search, document count computation process 2026 refers to menu item versus document count matrix 2032 to find out a keyword including the "sea" in the command-driven view from keyword list 2008. Then, as shown in Fig. 10(B), three keywords are found from keyword/document association table 2010: "overseas production site", "transport by sea", and "overseas transfer of plant". The information is transferred to this view through protocol control sections 2028 and 2040 and view process control section 2042 to display respective hit counts.

When, in Fig. 10(B), the user clicks "overseas production site" and "overseas transfer of plant" to highlight them and clicks "search" in the title bar, the selected keywords are passed to bibliographic information retrieval mechanism 2018 through view process control section 2042, protocol control sections 2040 and 2028, and document count computation process 2026. After bibliographic information retrieval mechanism 2018 has searched bibliographic information database 2004, a dedicated window for "Relevant article list" is opened, as shown in Fig. 10(C), and listing is presented of articles including "overseas production site" or "overseas transfer of plant".

In Fig. 10(C), by pointing at a certain article with the mouse cursor and double-clicking on it, its document ID is passed to content read mechanism 2024 through view process control section 2042, protocol control sections 2040 and 2048. Using the passed ID, content read mechanism 2024 accesses the document contents and returns actual data in target documents to view process control section 2042 via protocol control sections 2028 and 2040. Then, view process control section 2042 opens a new window (not shown) for displaying the actual document data.

E1. Automatic opening of view window

While it is of course possible for the user to open each view manually, the process also enables the user to choose a certain selection in a view and associated views to be automatically opened. For example, at the time of selecting an item of academic journal while a view which handles a class of media is being open, the process would allow view windows such as the name of society, time series, topic, and field thesaurus to be automatically opened. Fig. 10(C) is an example of window automatically opened. The relationship between the user selection and the view window to be automatically opened by the system is described as view profile information. Under instruction from the protocol control section of the search engine which has this information, view process control will open view windows which are not opened automatically.

View process itself also provides control over the amount of feedback information to the user by making decisions on window display. If a window is automatically opened by the view process control section, the view process will examine details of document counts to be displayed and open other windows only if an extreme imbalance is found in the details. If no imbalance is determined, the process will not appear in the foreground immediately, but continue to communicate with the view process control section in an active state until it receives dispersed details or a manual open instruction.

Methods for indicating dispersion include those using a mean value and variance and which specify a mean value + -} less than 10% to be a threshold to determine if a document count exists which exceeds the threshold.

E2. Popularity view

Empirically, a popularity of how many people are reading information is relied upon as an indication of the reliability of the information. In order to make use of this rule of experience for the system, content read section is provided with a mechanism for recording the number of references and its value is recorded in the bibliographic information database. The recorded reference count is displayed as a view for navigation and used as a search condition (e.g. an instruction of "up to top 50") in the processing of search and navigation.

F. Process flow for search/navigation

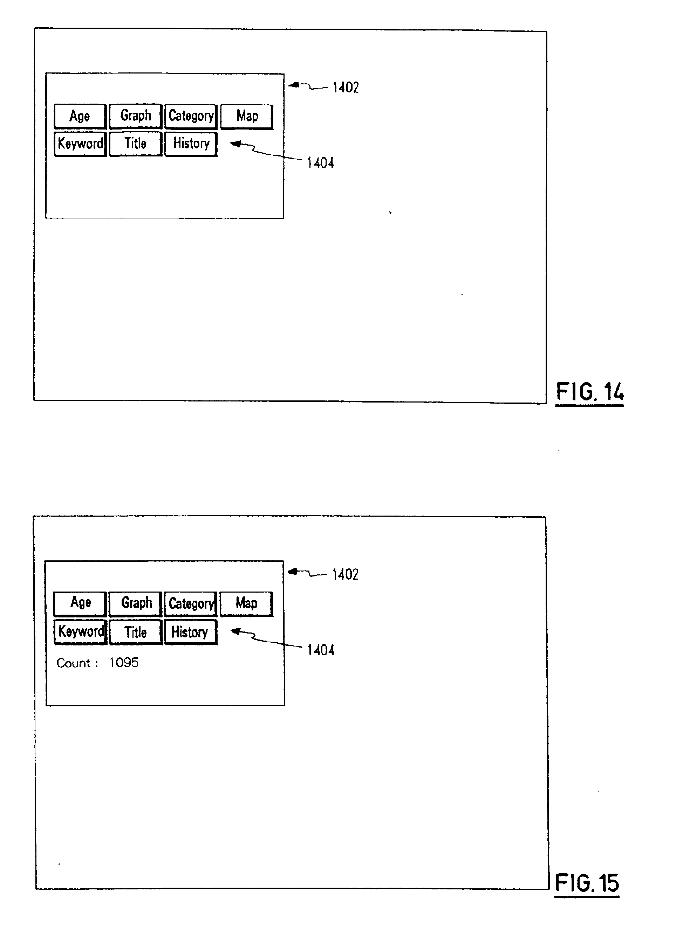

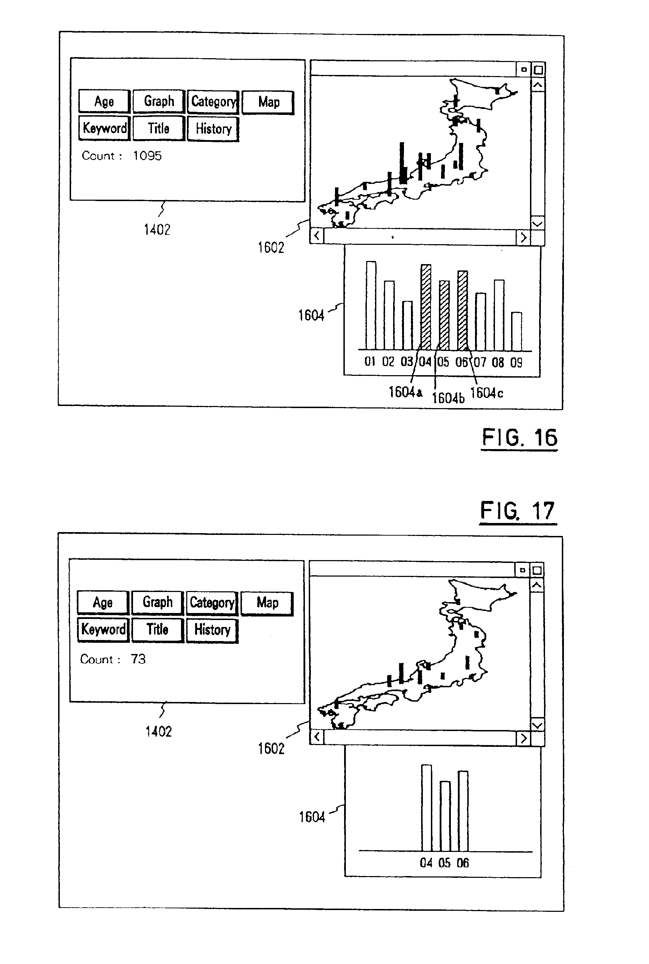

Referring to Fig. 11, there is shown the process flow for opening a view. When the user turns on his own client workstation, the main window is automatically brought up (see reference numeral 1402 in Fig. 14), at step 1150, based on, for example, the description of view control profile 2034 in the search engine section. Note that at this time resources such as the bitmap for displaying the main window necessarily reside on the client workstation. As the user chooses a view window icon or button (see the "map" button in Fig. 14, for example), at step 1151, view process control section 2042 on the client workstation will open the window of the specified view (see window 1602 in Fig. 16, for example). At the same time, at step 1152, view process control section 2042 sends details of items for the selected view to document count computation process 2026 via protocol control sections 2040 and 2028 as a request for the details of document counts (in this case, details of all documents are to be examined since no search condition has been specified).

At step 1154, document count computation process 2026 calculates document count details for the view designated by the view process control section 2042 by referencing menu item versus document count matrix 2032. Then, the document count details calculated by document count computation process 2026 are transferred from the search engine section to the GUI control section through protocol control sections 2028 and 2040 (e.g. by TCP/IP protocol) at step 1156 and at step 1158 passed to view process control section 2042.

At step 1160, view process control section 2042 displays the details within the window for the corresponding view (see for example Fig. 5), based on the information of document count details, so as to reflect the transferred document count details.

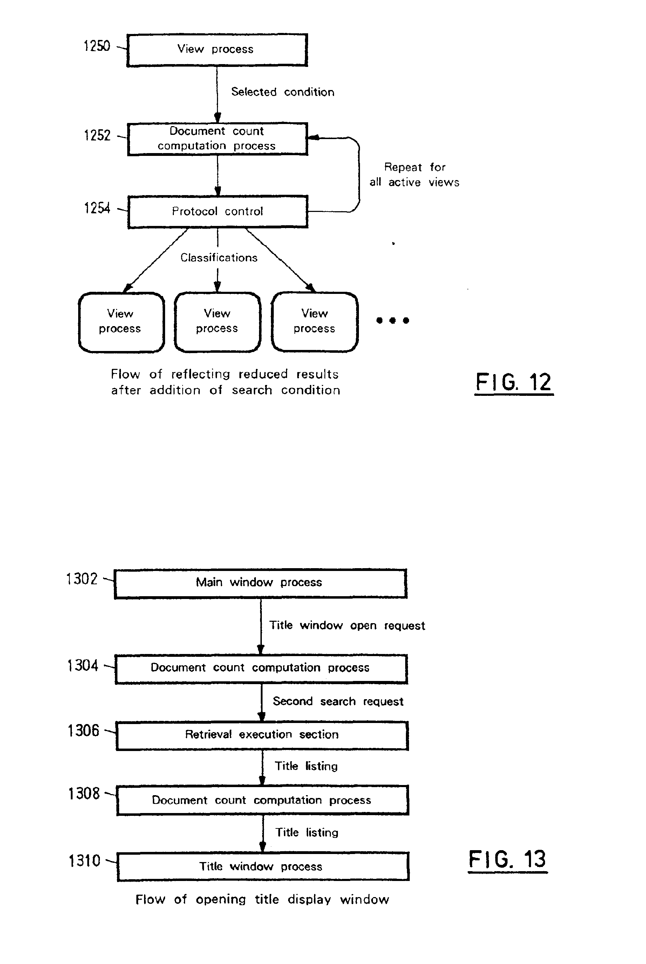

Referring now to Fig. 12, there is shown the process flow for reflecting reduced results by addition of a search condition. At step 1250 in Fig. 12, it is assumed that view process control section 2042 has opened at least one view window. When the user then selects at least one classified element in one view window. For example (see Figs. 5 to 9), to start a search, items associated with the classified element are passed to document count computation process 2026 through view process control section 2042, and protocol control sections 2040 and 2028. At step 1252, document count computation process 2026 accesses menu item versus document count matrix 2032 using the items passed, and performs computations for reducing the count of details for respective views currently active at the client which has issued a request for keyword search, in processing as described in section C: Document count computation process.

Calculated and reduced details are at step 1254 sent through protocol control sections 2028 and 2040 to view process control section 2042, which uses these reduced details to update the currently active views.

As shown in Fig. 12, the process steps of reducing the details for the condition selected at step 1252 and of communicating the reduced details to view process control section 2042 from protocol control section 2028 are repeated until they are completed for every view active on the client workstation.

Referring to Fig. 13, there is shown a process for displaying a title window. As in step 1150 in Fig. 11, it is assumed that at step 1302 of Fig. 13 the main window has been opened. At step 1302, when the user selects a title display icon or button (see the "title" button in Fig. 14), view process control section 2042 on the client workstation will open the title window (not shown). At the same time, at step 1302, view process control section 2042 sends a message indicating that the title window has been selected to document count computation process 2026 via protocol control sections 2040 and 2028.

At step 1304, in response to the received message indicating that the title window has been selected, document count computation process 2026 does not refer to menu item versus document count matrix 2032 but sends a request for a second retrieval to the retrieval execution section. This is because menu item versus document count matrix 2032 does not contain information on titles. Thus, at step 1306, the retrieval execution section performs a title search and the list of titles is passed at step 1308 to document count computation process 2026 and, sent as is from the search engine section to the GUI control section via protocol control sections 2028 and 2040. This allows view process control section 2042 to display a title window at step 1158.

G. Processing for additional views

A procedure for designing new menu views and adding them to the retrieval system will now be described.

1. The first step is to list all the selection (classified) items used in a view. For a view of the Japanese map, for instance, as shown in Fig. 6, all prefectures would be listed. To create a similar view of the world, it would be necessary to list the names of all countries in the world as classified items.

2. The next step is to design a graphical user interface (GUI) including resources such as maps, bar graphs, line graphs, title bars, icons, and background bitmaps, and write a window-based program in the form of a dynamic library routine (DLL) to be registered with the client system. Standardized GUI resources may be provided at the server (retrieval section) and made available for being downloaded as desired.

3. The next step is to register selection items for the newly-created view with document count matrix 2031, using view authoring support mechanism 2036. To obtain document counts, view authoring support mechanism 2036 then utilizes bibliographic information retrieval mechanism 2018, keyword retrieval mechanism 2020, and all text retrieval mechanism 2022. While one client in an environment where a number of clients are connected to a single server (retrieval section) is using view authoring support mechanism 2036 to update the menu item versus document count matrix on the server, it is quite likely for another client to issue a search request to the server. The search request by another client gives rise to the processing of access to the menu item versus document count matrix. A typical multitasking operating system has the capability to avoid compromising data integrity during update of the menu item versus document count matrix by copying a version of the menu item versus document count matrix prior to the update and enabling another client to access only this copied matrix. In addition, when a number of clients attempt to use view authoring support mechanism 2036 for updating the menu item versus document count matrix on the server, a standard function of such multitasking operating system is to allow, at the time a first client starts to use view authoring support mechanism 2036, locking of access to the menu item versus document count matrix by the other clients.

4. If required, the view control profile may be rewritten and conditions specified under which newly-registered views are automatically opened.

H. Embodiment

Referring to Figs. 14 to 18, a specific search procedure will be described. The example shown in Fig. 14 is designed to have the following views, assuming a newspaper article data retrieval system.

- Map view

This view displays on a map the names of places in Japan and the world. The names of places relative to the description of each article are associated with the points on the map (the names of prefectures for the Japanese map and of countries for the world map; see Fig. 6). This view allows the place names associated with, for example, the sites of accidents, addresses and birthplaces of parties involved, or the like, to be used for reducing the number of articles.

- Time series view

The dates of articles are used and correlated with time series.

- Corporate/organization name view

The names of corporations and organizations found in articles are matched with a "corporate/organization dictionary" for correlation.

- Person name view

The names of persons found in articles are matched with a "person name directory" for correlation.

- Topic thesaurus view

This view uses manually-classified articles according to the thesaurus provided by a newspaper company. This classification includes those inherent to the newspaper, such as politics, economy, social, and subcategories of them, such as trade friction between the United States and Japan, yen appreciation, murder, and accident.

- Keyword search view

This view uses keyword retrieval mechanism 2020 (Fig. 2) provided by the retrieval system.

- All text search view

This view uses all text retrieval mechanism 2022 (Fig. 2) provided by the retrieval system.

Referring now to Fig. 14, the initial screen displays only the main window 1402. One or more view windows, such as a map view, may be presented automatically on the initial screen by previously registering views with the view control file 2034. If the initial screen presents a view without asking the user for interaction, then the view would give a state of not being searched, i.e. the view which gives a classification with all articles taken as targets. However, the main window 1402 may be regarded as one of the views. Main window 1402 contains a plurality of buttons 1404 to be clicked with the mouse for various processing.

To search for articles on "murder", the user will click the keyword button on main window 1402 to open the keyword input view, as shown in Fig. 10, and type "murder". Then, as the user clicks the "search" button, the keyword being input is passed to document count computation process 2026 through view process control section 2042, protocol control sections 2040 and 2028 on the client section which is executing this search. Upon receiving the keyword, document count computation process 2026 calls keyword retrieval mechanism 2020 to obtain the number of articles, say, "1095".

This result is returned to view process control section 2042 through protocol control sections 2028 and 2040, and the count, 1095, is displayed at the bottom of the main window, as shown in Fig. 15. Simultaneously, log file 2030 is used to record that a keyword of "murder" has found a count of 1095.

Next, as the user clicks the "map" button on main window 1402, as shown in Fig. 16, there will be opened a view 1602 with bar graph indicating the counts of articles including the keyword of murder, by prefecture on the map, following the processing which has been described with reference to the flowchart of Fig. 11. When the user clicks the "graph" button on main window 1402, time series view 1602 is opened by a similar mechanism, with a bar chart indicating the counts of articles, by month for a period, which include the keyword of murder.

If the user clicks bars 1604a, 1604b, and 1604c on view window 1604 in order to narrow the search to consecutive three months (e.g. April, May, and June in 1993), then the corresponding portions of the bar graph are highlighted (e.g. the selections turn blue when they first have been in red, or the outlines of the selected portions change from solid to dashed lines).

Then, clicking on the "search" button of main window 1402 initiates the processing illustrated in Fig. 12 to limit articles to those which were run in the paper in April, May, and June 1993 (with a search result of 73 items, for instance), and at the same time, update the displayed classifications of currently active views 1602 and 1604 so that this limited search result is reflected. As seen in Fig. 17, the update operation leaves only the bars for the three selected months in view 1604.

In addition, although the months of appearance of articles were not first limited, it is clear from Fig. 17 that view 1602 has bars being lowered after being updated, since related articles have been limited to those in April, May, and June 1993.

In Fig. 16, while limitation was made only for the month of appearance, the limited search can also be applied to another category. For example, when the user moves the mouse cursor to view 1602, clicks on the "Yamanashi" and "Tokyo" areas on the map, rather than clicking on the "search" button immediately after narrowing down the months of appearance in view 1604, to highlight the bars of "Yamanashi" and "Tokyo", and then clicks on the "search" button, search results will be limited to the articles on murder occurring in Yamanashi or Tokyo in a period of April, May, and June 1993.

Using only such map and time series views, a "discovery" can also be made as follows:

(1) Retrieve related articles with a keyword of "murder."

(2) Look at the map view to find that many murder articles are for large cities. This is a common understanding since population and the number of murder cases correlate. However, if an unexpectedly high bar is found in an area where murder articles should be apparently few, a peculiar case occurred in the local area could be brought up as a focus of attention.

(3) Then, pick up such areas in the map view, narrow down the articles, and check out the results in the time series view. This gives substantial estimation of the progress of the case from its occurrence to arrest or trial (since such event is directly followed by a burst of many related articles). Thus, it can be figured out which articles, among many, should be browsed to know the progress of the case.

Moreover, by applying a person name view occasionally, it can also be seen that with what frequency the suspect, culprit, witness, or the like appears in murder articles.

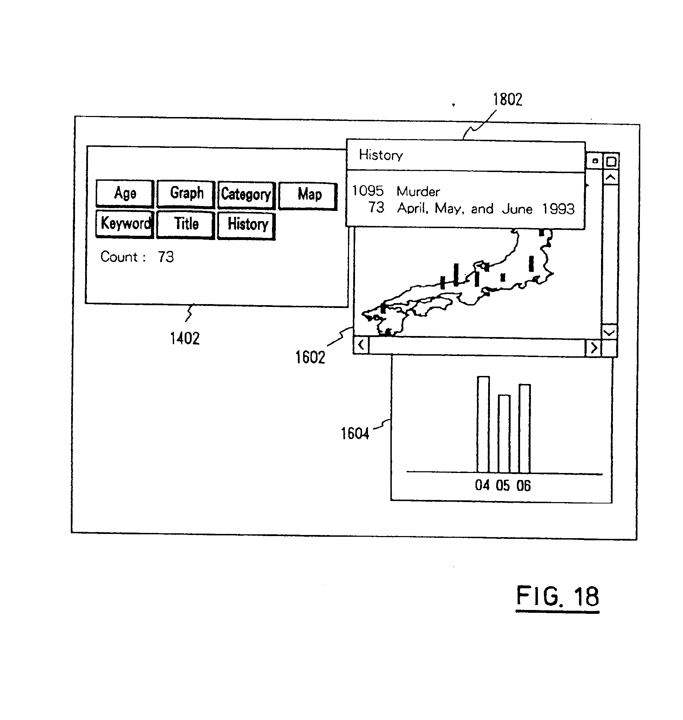

After the search has been narrowed, as in Fig. 17, the user may want to return to the original search condition. In such case, the user would click on the "history" button on main window 1402. Then, as shown in Fig. 18, history window 1802 is opened and the history of retrieval being made so far is presented. In the embodiment, this history is actually stored in log file 2030 of the search engine section. It is also possible, however, to display such retrieval history information at the GUI control section (client), if required. Clicking on the "murder" line in history window 1802, the search is made again with only a keyword of "murder". Then a numeral of "1095" is displayed again in main window 1402. Since this search result is reflected also in view windows 1602 and 1604, the user will return to the display of Fig. 16. With this state, a view which is different from the map or time series may be applied to look at the articles on murder cases from a different point of view.

Though not shown in Figs. 14 to 18, a plurality of menus for selecting views may be presented to the user by displaying a pull-down menu which contains various views associated with the "category", not by opening views immediately after clicking on the "category" button in main window 1402.

As is apparent from the above description, a method and system are provided to allow a user who is not familiar with database searching or is trying to search fields the user is not familiar with, to obtain the search results desired by the user, by dynamically applying prepared views for displaying the counts of classifications.

The present invention may be applied not only to newspaper articles, as described in the embodiment, but to any databases that are based on natural languages, such as library records, patents, technical/scientific articles, chemical compound databases, and the like.

## Claims

1. A computer-based information retrieval method for retrieving stored information in response to interactive operations and displaying the retrieval result on a graphics screen, said method comprising the steps of:
   preparing and storing a plurality of views through which to view the retrieval result from different aspects;
   applying at least one of said views to said stored information;
   displaying on said screen a visual representation of said applied view, said visual representation containing a plurality of classification elements each of which is visually associated with an indication of the respective number of information elements in said stored information;
   allowing a user to select at least one classification element; and

in response to said select operation, retrieving said stored information using the at least one selected classification element as a keyword.

2. The method of claim 1 wherein said information to be retrieved comprises a set of documents and said number of information elements is the number of documents related to said classification elements.

3. The method of claim 1 or 2, wherein said classification elements are represented by icons and said indication of the number of information elements comprises a numeral displayed in association with a respective classification element.

4. The method of any preceding claim, wherein said stored information is associated with place names, and said views include a map view, in which said classification element represents a region or district which has the place name associated with said retrieved information.

5. The method of any preceding claim, wherein said stored information is associated with dates, and said views include an age view, in which said classification element represents a month or year.

6. The method of any preceding claim, wherein in response to the selection of a plurality of classification elements in a single view, information elements including any of said classification elements are retrieved.

7. The method of any preceding claim, further including the steps of:
inputting a keyword to be retrieved, prior to applying said view;
retrieving stored information based upon the inputted keyword and temporarily storing the retrieval results, wherein the applied view is applied to said temporarily stored retrieval results, and in response to said select operation, said stored information is retrieved from said temporarily stored retrieval results.

8. The method of claim 7, further including storing a synonym dictionary associated with different keywords, wherein said step of retrieving stored information based upon the inputted keyword includes the steps of accessing said synonym dictionary to locate synonyms of said keyword, and retrieving stored information based not only upon said inputted keyword, but also based upon the located synonyms thereof.

9. The method of claim 8, wherein said views include a view for displaying words associated with each other as synonyms.

10. The method of any preceding claim, further comprising the steps of temporarily storing the retrieval results obtained in response to said select operation, and selecting and applying at least one of said plurality of views to these temporarily stored retrieval results.

11. The method of claim 6 or 10, further including the step of storing each of said temporarily stored retrieval results as a log which is separately accessible.

12. The method of any preceding claim, wherein said graphics screen provides multiple display windows, and each visual representation of any applied view is displayed in a single separate window.

13. The method of claim 12, further including the steps of associating a first view with a second, different, view and in response to the selection and display of said first view, displaying a visual representation of said associated second view in a different window from the window in which said first view is displayed.

14. The method of claim 12 or 13, further including the steps of generating a window and assigning said window to a prepared view, thereby making said view active, and in response to the retrieval of stored information based on a keyword, determining if there is an active view, and if so, displaying in the window assigned to said active view a visual representation of said view.

15. The method of claim 12, 13 or 14, further including the steps of specifying a condition for automatically opening at least one of said plurality of views upon receiving retrieval results, and in response to the retrieval of stored information based on a keyword, determining if said retrieval results meet the condition for automatically opening a view, and if so, opening a new window and displaying therein a visual representation of the view to be automatically opened.

**16.** The method of any preceding claim, further comprising the steps of building a two-dimensional table for storing in a tabular form the number of information elements including said classification elements and the number of said information elements including at the same time all of said classification elements, other classification elements of the current view, and classification elements of other views, for respective classification elements of said plurality of views; and for retrieved information elements estimating from the value of the count stored in said two-dimensional table the number of retrieved information elements for each classification element of the currently opened view.

**17.** A computer-based information retrieval system for retrieving stored information in response to interactive operations and displaying the retrieval result on a graphics screen, said system comprising:

means for preparing and storing a plurality of views through which to view the retrieval result from different aspects;

means for applying at least one of said views to said stored information;

means for displaying on said screen a visual representation of said applied view, said visual representation containing a plurality of classification elements each of which is visually associated with an indication of the respective number of information elements in said stored information;

means for allowing a user to select at least one classification element; and

means, responsive to said select operation, for retrieving said stored information using the at least one selected classification element as a search criterion.

Search engine section

GUI control section

Hardware environment according to the invention

FIG. 1

FIG. 2

System configuration

Menu item versus document count matrix

FIG. 3

| Hierarchical position | Selection name | Retrieval instruction ("xxx" instructs a search with all text retrieval mechanism) |
|---|---|---|
| 1 | : Asia: | "Asia" |
| 1. 1 | : Far East: | "Far East" "ASEAN" |
| 1. 1. 1 | : Japan: | "Japan" |
| 1. 1. 2 | : Korea: | "Korea" "Republic of Korea" "North and South Korea" |
| 1. 1. 3 | : China: | "China" "People's Republic of China" |

Format of hierarchical menu items input to the view authoring support mechanism

FIG. 4

Single layer display

**FIG. 5**

Map display

**FIG. 6**

Direct input area for selection

Age

B.C.
1 - 10th century
11 - 15th century
16th century                    1800-        1831
17th century                    1810-        1832
[18th century]                  1820-        1833
19th century                    [1830]       1834
                                1840-        1835
                                1850-        1836

**FIG. 7**

Upper and lower layer display

Thesaurus                    Direct input area for selection

                    Ship                Bus

Motive power    [Passenger car]         Automobile

                    Industry            Truck

**FIG. 8**

Network display

Age

Direct input area for selection

Document count

86  87  88  89  90  91  92  93

Chronological display

## FIG. 9

1150 — Main window process

1151 — Open request of view window

1152 — View process control

Request for document count classification

1154 — Document count computation process

Document count classification

1156 — Protocol control

Document count classification

1158 — View process control

Document count classification

1160 — View process activation ——→ Classification display

View open flow

## FIG. 11

# FIG. 10

## (A)

Keyword    106      [Search] [Cancel]

Magazine name [ _____ ] [▼]

Publisher [ _____ ] [▼]    ⊙ Keyword search

Author [ _____ ] [▼]    ⊙ All text search

Search word    108    [×]    102   104

[ sea ]    [+]

■ Fuzzy    [−]    ■ Fuzzy

## (B)

Keyword      [Search] [Cancel]

Magazine name [ _____ ] [▼]

Publisher [ _____ ] [▼]    ⊙ Keyword search

Author [ _____ ] [▼]    ⊙ All text search

Search word    [×]

[ sea ]    [+]

■ Fuzzy    [−]    □ Fuzzy

| overseas production site | 7 |
| transport by sea | 24 |
| overseas transfer of plant | 16 |

## (C)

Relevant article list      [Contents] [Cancel]

| Date | Magazine name | Publisher | Title |
|---|---|---|---|
| 1994. 5. 28 | Nikkei Business | Nikkei | Deindustrialization of Japanese Industries |
| 1994. 3. 27 | House Bulletin 94-2 | In-House | To the Innovation of Industrial Structure |

Command input method

1250 — View process

Selected condition

1252 — Document count computation process

Repeat for all active views

1254 — Protocol control

Classifications

View process    View process    View process    • • •

Flow of reflecting reduced results after addition of search condition

FIG. 12

1302 — Main window process

Title window open request

1304 — Document count computation process

Second search request

1306 — Retrieval execution section

Title listing

1308 — Document count computation process

Title listing

1310 — Title window process

Flow of opening title display window

FIG. 13

←～ 1402

| Age | Graph | Category | Map |
|-----|-------|----------|-----|
| Keyword | Title | History | |

← 1404

FIG. 14

←～ 1402

| Age | Graph | Category | Map |
|-----|-------|----------|-----|
| Keyword | Title | History | |

Count : 1095

← 1404

FIG. 15

Age | Graph | Category | Map
Keyword | Title | History

Count : 1095

1402

1602

1604

01 02 03 04 05 06 07 08 09

1604a 1604b 1604c

## FIG. 16

## FIG. 17

Age | Graph | Category | Map
Keyword | Title | History

Count : 73

1402

1602

1604

04 05 06

1802

History

| Age | Graph | Category | Map |

| Keyword | Title | History |

Count : 73

1402

1095 Murder
73 April, May, and June 1993

1602

1604

04 05 06

FIG. 18

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-91 06916 (ENCYCLOPAEDIA BRITANNICA INC ;REED MICHAEL (US); BESTICK GREG (US)) 16 May 1991 * page 8, line 1 - page 9, line 5; claims 1-54,80,90; figures 1,23,24A * | 1-8,17 | G06F17/30 |

TECHNICAL FIELDS SEARCHED (Int.Cl.6)

G06F

The present search report has been drawn up for all claims

| Place of search | Date of completion of the search | Examiner |
|---|---|---|
| THE HAGUE | 9 November 1995 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)